# EUROPÄISCHE PATENTSCHRIFT

(11) **EP 0 484 691 B1**
(45) Veröffentlichungstag und Bekanntmachung des Hinweises auf die Patenterteilung: **22.05.1996**
(21) Anmeldenummer: 91117347.4
(22) Anmeldetag: 11.10.1991
(51) Int. Cl.: F02P 17/00, F02P 15/00, G01M 15/00, F02D 41/14, F02P 11/06

(54) **Verfahren zur Funktionsüberwachung von Brennkraftmaschinen**
Method and apparatus for detecting anomalies in the operation of combustion engines
Procédé pour la surveillance du fonctionnement de moteurs à combustion

(30) Priorität: 09.11.1990 DE 4035957
(43) Veröffentlichungstag der Anmeldung: 13.05.1992
(73) Patentinhaber: ROBERT BOSCH GMBH, 70442 Stuttgart (DE)
(72) Erfinder: Schleupen, Richard, Dipl.-Ing., W-7121 Grossingersheim (DE); Langner, Arndt-Matthias, Dipl.-Ing., W-7014 Kornwestheim (DE)

(56) Entgegenhaltungen:
- WO-A-92/11522
- DE-A- 3 922 447
- DE-A- 3 923 757
- DE-A- 3 933 826
- US-A- 3 942 102
- US-A- 4 023 358
- US-A- 4 602 507
- PATENT ABSTRACTS OF JAPAN vol. 16, no. 248 (M-1261)5. Juni 1992 & JP-A-4058037
- PATENT ABSTRACTS OF JAPAN vol. 10, no. 242 (M-509)21. August 1986 & JP-A-61072844
- PATENT ABSTRACTS OF JAPAN vol. 13, no. 60 (M-796)10. Februar 1989 & JP-A-63263241
- PATENT ABSTRACTS OF JAPAN vol. 13, no. 45 (M-792)2. Februar 1989 & JP-A-63253153
- ELEKTRONIK Bd. 38, Nr. 14, Juli 1989, M]NCHEN Seiten 78 - 82 , XP000030413 D. DREYER 'KFZ-TESTER MIT DRAHTLOSER MESSWERTAUFNAHME'

## Beschreibung

### Stand der Technik

Die Erfindung geht aus von bekannten Verfahren zur Funktionsüberwachung von Brennkraftmaschinen, wie es beispielsweise bereits aus der EP-A-0 344 349 bekannt ist. Hierbei handelt es sich um eine primärseitige Überwachung der Funkendauer. Weiterhin sind für die Funktionsüberwachung einer Brennkraftmaschine zur Verbrennungsaussetzererkennung zum Beispiel das Verfahren der Laufunruheerkennung US-PS 4,691,288, die Erfassung des Lambda-Sondensignals EP-A-0 387 254 oder die Erfassung der Abgastemperatur bekannt.

Diese bekannten Verfahren zur Verbrennungsaussetzererkennung haben jedoch den Nachteil, daß die Erkennung einzelner oder statistisch verteilter Aussetzer schwierig ist. Zudem sind die Erkennungsmöglichkeiten im Bereich sehr kleiner Motorlast eingeschränkt. Außerdem hat speziell die Laufunruheerkennung den Nachteil, daß mechanische Schwingungen des Motors und Fahrbahneinflüsse die Erkennung von Aussetzern erschweren.

Aus der US-A-4,602,507 ist eine Einrichtung zur Überwachung der Funktion einer Brennkraftmaschine bekannt, wobei ein Verfahren zur Verbrennungsbewertung oder einem Verfahren zur Zündungsbewertung durchzuführbar sind.

Mit der vorliegenden Erfindung soll die Erkennungsqualität von Zünd- bzw. Verbrennungsaussetzern verbessert werden.

### Vorteile der Erfindung

Das erfindungsgemäße Verfahren mit den Merkmalen des Hauptanspruchs hat gegenüber dem Bekannten den Vorteil, daß ein Verfahren zur Verbrennungsaussetzererkennung mit einem Verfahren zur Zündungsüberwachung so kombiniert wird, daß je nach Betriebsbedingungen der Brennkraftmaschine mindestens ein Verfahren auswertbare Ergebnisse liefert.

Durch die in den Unteransprüchen aufgeführten Maßnahmen sind vorteilhafte Weiterbildungen und Verbesserungen des im Hauptanspruch angegebenen Verfahrens zur Funktionsüberwachung möglich.

Besonders vorteilhaft ist, daß verschiedene Verfahren so kombiniert werden, daß die Nachteile eines Verfahrens durch ein zweites Verfahren aufgehoben werden, indem in den Betriebsbereichen der Maschine, in denen das eine dieser Verfahren ungenaue Ergebnisse liefert, dieses ausgeblendet wird.

Weiterhin ist es vorteilhaft, daß durch einen Plausibilitätsvergleich die Fehlererkennung überprüft und somit das Risiko einer irrtümlichen Fehlererkennung bei ordnungsgemäßer Zündung beziehungsweise Verbrennung vermindert wird.

### Zeichnung

Ausführungsbeispiele der Erfindung sind in der Zeichnung dargestellt und in der nachfolgenden Beschreibung näher erläutert. Es zeigen Figur 1 die Verfahrens-Schrittfolge einer Funktionsüberwachung durch Kombination der Laufunruheerkennung mit einer Zündaussetzeerkennung und Figur 2 die Verfahrens-Schrittfolge einer Kombination der Lambda-Signalauswertung oder der Abgastemperaturerfassung mit einer Zündaussetzererkennung und Figur 3 den Prinzipaufbau einer Brennkraftmaschine mit Erfassung der Betriebsparamter.

### Beschreibung des Ausführungsbeispiels

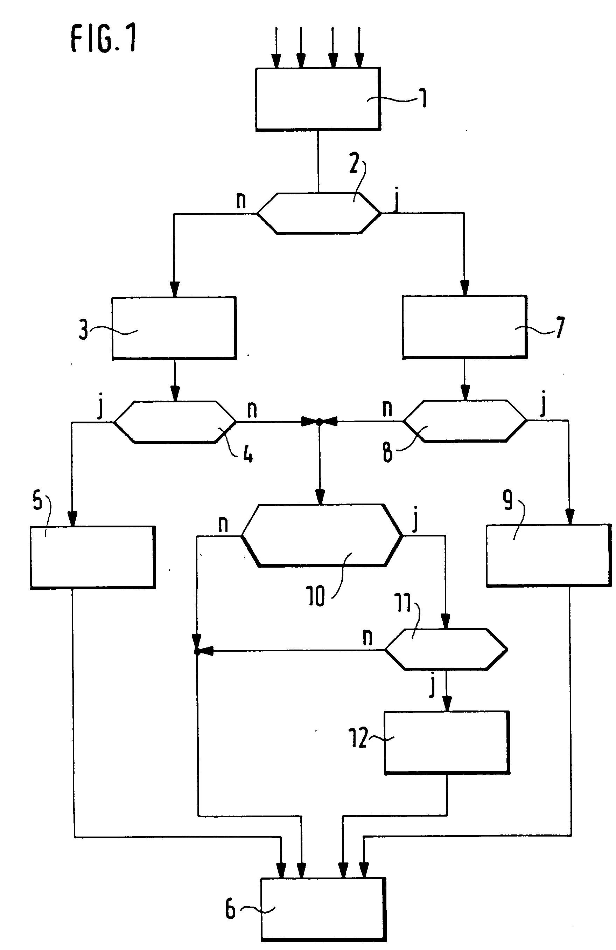

In Figur 1 werden im Programmschritt 1 verschiedene Betriebsparamter der Brennkraftmaschine wie Drehzahl, Drehmoment, Temperatur etc. zur Ermittlung des Betriebspunktes erfaßt und anschließend an eine Abfrage 2 weitergegeben. Hier wird geprüft, ob das Verfahren der Laufunruheerkenung möglich ist und aussagekräftige Informationen in Bezug auf Verbrennungsaussetzer liefert. Ein "Nein" dieser Abfrage, das heißt die Laufunruheerkennung ist als aussagekräftiges Verfahren nicht anwendbar beispielsweise bei extremen Fahrbahnverhältnissen oder sehr kleiner Motorlast, führt zum Programmschritt 3-der Überwachung der Zündaussetzerrate (ZAR). Das heißt, es wird eine Überprüfung auf Zündaussetzer vorgenommen, zum Beispiel anhand der primärseitigen Überwachung der Brennspannung und/oder der Funkendauer, wobei die Rate der Zündaussetzer erfaßt wird. Im anschließenden Programmschritt - der Abfrage 4 - wird kontrolliert, ob die Zündaussetzerrate (ZAR) über einer Schwelle liegt, die für den Katalysator eine Gefährdung wäre. Falls eine Katalysatorgefährdung vorliegt, erfolgt im Programmschritt 5 eine zylinderselektive Kraftstoffabschaltung und die Fehlerspeicherung "Zündung defekt". Im anschließenden Programmschritt 6 erfolgt der Rücksprung und bei neu anliegenden Daten der nächsten Verbrennung wiederholt sich der Ablaufplan.

Wurde im Programmschritt 2 festgestellt, daß das Laufunruheverfahren aussagekräftige Ergebnisse liefert, erfolgt im Programmschritt 7 die Ermittlung von Verbrennungsaussetzern mittels Laufunruheverfahren, wobei die Verbrennungsaussetzerrate (VAR) ermittelt wird.

In der Abfrage 8 wird kontrolliert, ob die Verbrennungsaussetzerrate (VAR) über einer für den Katalysator kritischen Schwelle liegt. Ist dies der Fall, so wird im Programmschritt 9 eine zylinderselektive Kraftstoffabschaltung und eine Fehlerspeicherung vorgenommen. Anschließend erfolgt der bereits erwähnte Rücksprung im Programmschritt 6.

Wurde in der Abfrage 4 festgestellt, daß die Zündaussetzerrate (ZAR) unter der für den Katalysator kritischen Schwelle liegt, so erfolgt die Weitergabe dieser Ergebnisse an die Abfrage 10. Auch eine "Nein"-Antwort in der Abfrage 8 - ob die Verbrennungsaussetzerrate über einer bestimmten Schwelle liegt, führt zur Abfrage 10. Diesen Weg des Programmablaufs geht man, da statistisch verteilte Einzelaussetzer durch das Laufunruheverfahren nicht sicher erkannt werden. Deshalb erfolgt bei einem negativen Ergebnis dieses Verfahren der Laufunruheprüfung die Weitergabe an die Abfrage 10. In der Abfrage 10 wird geprüft, ob der Erkennungsbereich für einzelne Zündaussetzer gegeben ist. Die Erkennung von einzelnen Zündaussetzern ist nur bei Betrieb der Maschine im Schub bis Teillastbereich, also nur in einem eingeschränkten Kennfeldbereich sicher möglich. Sind die Bedingungen für die Erkennung einzelner Zündaussetzer nicht gegeben, so erfolgt im Prgrammschritt 6 der Rücksprung und die erneute Auswertung. Eine "Ja"-Antwort der Abfrage 10 führt zum Programmschritt 11. Hier wird kontrolliert, ob einzelne Zündaussetzer vorliegen. Sollte dies nicht der Fall sein - also ein "Nein" dieser Abfrage, wird im Programmschritt 6 der Rücksprung durchgeführt. Werden in der Abfrage 11 einzelne Zündaussetzer erkannt, so erfolgt im Programmschritt 12 eine Fehlerspeicherung "Einzelaussetzer". Eine Abschaltung der Kraftstoffzufuhr ist in diesem Fall nicht notwendig, da sporadische Einzelaussetzer nicht zu einer Katalysatorschädigung führen. Anschließend erfolgt auch hier im Programmschritt 6 der Rücksprung an den Anfang des Programms.

Die Vorteile der Laufunruheerkennung und zwar die Erkennung eines jeden Verbrennungsaussetzers und nicht nur eines Zündaussetzers werden hierbei durch die Vorteile einer Zündaussetzererkennung ergänzt. Eine Zündaussetzererkennung hat eine gute Erkennungsmöglichkeit bei statistisch yerteilten Einzelaussetzern im Betriebsbereich Schub bis Teillast der Maschine sowie bei niedrigen Drehzahlen. Gleichzeitig kann sie Nachteile der Laufunruheerkennung bei mechanischen Einflüssen weitgehend kompensieren, indem bei gestörter Laufunruheerkennung die Zündaussetzererkennung allein in Funktion bleibt. Die Zündaussetzererkennung erfolgt dabei mit einer primärseitigen Überwachung der Funken-Brennspannung und/oder der Funkenbrenndauer.

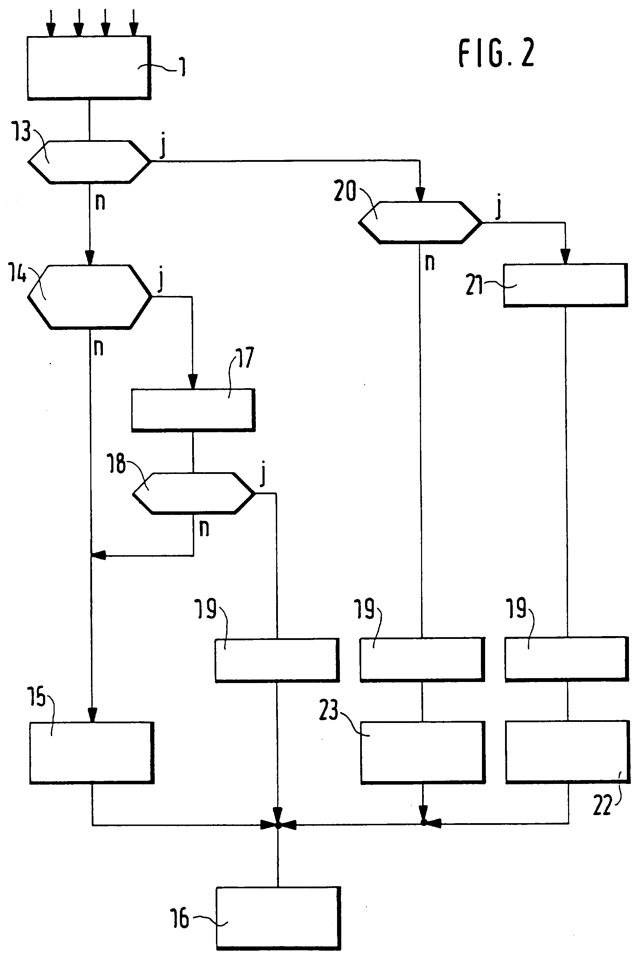

Figur 2 zeigt eine Möglichkeit, Verfahren zur Verbrennungsaussetzererkennung mit Verfahren zur Zündaussetzererkennung zu kombinieren. Zunächst werden wie bei Figur 1 im Programmschritt 1 die verschiedenen Betriebsparameter erfaßt. In einer anschließenden Abfrage 13 wird geprüft, ob ein Verbrennungsaussetzer erkannt wird. Hierfür stehen statt der Laufunruheerkennung nach Figur 1 zwei weitere Verfahren, nämlich eine Lambda-Signalauswertung oder eine Abgastemperaturauswertung zur Verfügung, zwischen denen gegebenenfalls je nach Betriebsbereich der Maschine umgeschaltet wird. Sie können in bestimmten Betriebsbereichen parallel laufen, wobei ihre Ergebnisse über eine Plausibilitätsstufe miteinander verglichen werden. Beide Verfahren haben den Vorteil, daß sie nicht nur Zündaussetzer- sondern auch Verbrennungsaussetzer mit unterschiedlcher Ursache erfassen. Jedoch ist mit diesen Verfahren keine Zylinderzuordnung durchzuführen und eine Einzelaussetzererkennung problematisch beziehungsweise bei Abgastemperaturauswertung zum Beispiel wegen zu großer Trägheit gar nicht durchzuführen. Wird kein Verbrennungsaussetzer erkannt, diese Frage 13 also mit "Nein" beantwortet, so wird in einer Abfrage 14 abhängig vom Betriebsbereich der Maschine kontrolliert, ob eine Erkennung einzelner Zündaussetzer möglich ist. Ist keine Erkennung von Einzelaussetzern möglich, wird in einem Programmschritt 15 "keine Fehlererkennung" registriert und eventuell bereits eingeleitete Schutzmaßnahmen wieder abgeschaltet. Anschließend erfolgt im Programmschritt 16 ein Rücksprung und somit eine erneute Fehlererkennung, das heißt, im Programmschritt 1 des Verfahrens wird erneut eine Erfassung der Betriebsparameter vorgenommen. Erfolgt im Programmschritt 14 eine positive Antwort auf die Frage, ob die Bedingungen für eine einzelne Zündaussetzererkennung gegeben sind, so wird in einem Programmschritt 17 eine zylinderselektive Zündeinzelaussetzererkennung über einen Vergleich eines Zündaussetzers mit der Zündfolge durchgeführt und die Ergebnisse an eine Abfrage 18 weitergegeben. Wird in Abfrage 18 die Frage nach einem Zündeinzelaussetzer verneint, so folgt die Weitergabe dieses Ergebnisses an den Programmschritt 15 "keine Fehlererkennung". Der weitere Ablauf ist nun entsprechend den bereits weiter oben zu Programmschritt 15 beschriebenen Maßnahmen. Bei einer positiven Antwort der Abfrage 18, das heißt beim Vorliegen eines Einzelzündaussetzers, erfolgt die Weitergabe dieses Ergebnisses im Programmschritt 19 in einen Speicher, der diesen Fehler speichert und eine Diagnoselampe betätigt. Anschließend erfolgt auch hier im Programmschritt 16 der Rücksprung und der erneute Start dieses Programmablaufes. Der "Ja-Ausgang" der Abfrage 13 führt zum Programmschritt 20, daß heißt, nach erkannten Verbrennungsaussetzern in Abfrage 13 wird anschließend untersucht, ob Zündaussetzer erkannt werden. Gleichzeitig wird eine statistische Erfassung der Zündaussetzerrate vorgenommen. Wird in dieser Abfrage 20 ein Zündaussetzer zum Beispiel durch eine primärseitige Erfassung der Funkenbrennspannung und/oder der Funkenbrenndauer durch Funkenstrommessung auf der Sekundärweite der Zündspulen erkannt, erfolgt im anschließenden Programmschritt 21 eine Zylinderzuordnung des Aussetzers beispielsweise über einen Vergleich mit der Zündfolge. Dem Programmschritt 21 folgt der bereits bekannte Programmschritt 19, der den Fehler in einem Speicher ablegt und eine Diagnoselampe betätigt. Im anschließenden Programmschritt 22 werden zylinderselektive Schutzmaßnahmen zum Beispiel bei sequentieller Einspritzung das Abschalten der Einspritzung von diesem Zylinder vorgenommen. Anschließend erfolgt mit dem Programmschritt 16 der Rücksprung. Wird bei Programmschritt 20 kein Zündaussetzer erkannt, so kann der im Programmschritt 13 erkannte Verbrennungsaussetzer nicht einem Zylinder zugeordnet werden und es folgt im Programmschritt 19 ebenfalls eine entsprechende Fehlerspeicherung und das Betätigen einer Diagnoselampe. Anschließend werden im Programmschritt 23 pauschale Schutzmaßnahmen durchgeführt zum Beispiel eine Bankabschaltung für die über einen Einspritzkanal versorgten Zylinder der Brennkraftmaschine. Dem Programmschritt 23 folgt ebenfalls mit dem Programmschritt 16 der Rücksprung an den Anfang der Programmablaufes.

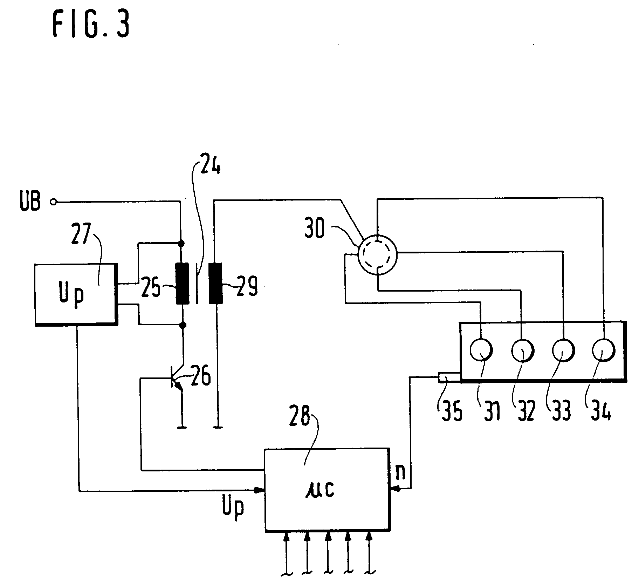

Figur 3 zeigt den prinzipiellen Aufbau einer Brennkraftmaschine mit der Erfassung der benötigten Größen für die Funktionsüberwachung der Brennkraftmaschine. Eine Zündspule 24 ist mit ihrer Primärwicklung 25 einerseits an Batteriespannung UB angeschlossen und andererseits über einen Steuertransistor 26 mit Masse verbunden. Über die Primärwicklung 25 wird von einer Spannungserfassungsschaltung 27 die auf die Primärseite transformierte Brennspannung UB erfaßt und an einen Mirkrocomputer 28 weitergegeben. Der Steuertransitor 26 ist an seiner Basis ebenfalls mit dem Mikrocomputer 28 verbunden.

Die Sekundärwicklung 29 ist mit einem Verteiler 30 verbunden, der wiederum dafür sorgt, daß die Hochspannung entsprechend der Zündfolge an die nicht dargestellten Zündkerzen von vier Zylindern 31 bis 34 geleitet wird. Über einen Drehzahlsensor 35 wird die Laufruhe überwacht, beziehungsweise eine auftretende Laufunruhe detektiert. Die Signale dieses Sensors 35 werden an den Mikrocomputer 28 weitergegeben. Im Mikrocomputer 28 werden alle Betriebsparameter erfaßt und entsprechend der beschriebenen Programmabläufe bearbeitet, so daß ein fehlerhaftes Arbeiten der Brennkraftmaschinen erkannt wird und entsprechende Schutzmaßnahmen eingeleitet werden.

## Patentansprüche

1. Verfahren zur Funktionsüberwachung einer Brennkraftmaschine zum Erkennen von Zünd- bzw. Verbrennungsaussetzern, welches für jeden Verbrennungsvorgang in der Brennkraftmaschine durchgeführt wird, wobei mindestens ein Verfahren zur Verbrennungsaussetzererkennung mit mindestens einem weiteren Verfahren zur Zündungsüberwachung derart kombiniert wird, daß in jedem Arbeitsbereich der Brennkraftmaschine mindestens eines der beiden Verfahren arbeitet und wobei jeweils das Verfahren ausgeblendet wird, welches in dem momentanen Arbeitsbereich der Brennkraftmaschine ungenaue Ergebnisse liefert.

2. Verfahren nach Anspruch 1, dadurch gekennzeichnet, daß ein Verfahren zur Laufunruhemessung als Verbrennungsaussetzererkennung mit einer primärseitigen Überwachung der Funkenbrennspannung und/oder der Funkendauer als Verfahren zur Zündaussetzererkennung kombiniert und das Verfahren zur Laufunruhemessung bei sehr kleiner Motorlast und/oder extremen Fahrbahnverhältnissen ausgeblendet wird.

3. Verfahren nach Anspruch 1, dadurch gekennzeichnet, daß die Erfassung des Lambda-Sondensignals und/oder die Erfassung der Abgastemperatur als Verbrennungsaussetzererkennung mit einer primär- und/oder sekundärseitigen Brennspannungserfassung und/oder der Erfassung der Funkendauer zur Zündaussetzererkennung kombiniert wird.

4. Verfahren nach Anspruch 1 bis 3, dadurch gekennzeichnet, daß die Ergebnisse der verschiedenen Verfahren zur Verminderung des Risikos von falschen Überwachungsergebnissen in einer Plausibilitätsbetrachtung überprüft werden.

## Claims

1. Method for monitoring the operation of an internal combustion engine for detecting spark failures and combustion failures, which method is carried out for each combustion process in the internal combustion engine, at least one method for detecting combustion failure being combined with at least one further method for ignition monitoring in such a way that at least one of the two methods operates in each working range of the internal combustion engine and in each case that method which supplies imprecise results in the present working range of the internal combustion engine being extracted.

2. Method according to Claim 1, characterized in that a method for measuring unsteady running as a means of detecting combustion failures is combined with a primary-side means of monitoring the sparking voltage and/or the duration of sparking as a method for detecting ignition failures, and the method for measuring unsteady running is extracted in the case of a very small engine load and/or in the case of extreme roadway conditions.

3. Method according to Claim 1, characterized in that the detection of the lambda probe signal and/or the detection of the exhaust gas temperature as a means of detecting combustion failures is combined with a primary-side and/or secondary-side means of detecting the sparking voltage and/or the detection of the sparking duration in order to detect ignition failures.

4. Method according to Claim 1 to 3, characterized in that the results of the various methods are checked in a plausibility analysis in order to avoid the risk of false monitoring results.

## Revendications

1. Procédé pour surveiller le fonctionnement d'un moteur à combustion interne pour détecter les ratés d'allumage ou de combustion, se produisant à chaque combustion dans le moteur à combustion interne, selon lequel au moins un procédé de détection des ratés de combustion est combiné à au moins un autre procédé de surveillance de l'allumage de façon que dans chaque plage de fonctionnement du moteur à combustion interne, au moins l'un des deux procédés soit actif, alors que chaque fois est mis hors service le procédé qui fournirait des résultats imprécis dans cette plage de travail instantané du moteur à combustion interne.

2. Procédé selon la revendication 1, caractérisé en ce qu'un procédé de mesure des irrégularités de fonctionnement comme moyen de détection des ratés de combustion est combiné à une surveillance du côté primaire de la tension fournissant les étincelles et/ou la durée des étincelles comme procédé de détection des ratés d'allumage et le procédé de mesure de l'irrégularité de fonctionnement est mis hors service lorsque la charge appliquée au moteur est très faible et/ou que les conditions relatives à la chaussée sont extrêmes.

3. Procédé selon la revendication 1, caractérisé en ce que la détection du signal de la sonde lambda et/ou la détection de la température des gaz d'échappement est combinée comme détection des ratés de combustion à une détection de la tension de combustion du côté primaire et/ou secondaire et/ou la détection de la durée des étincelles pour détecter les ratés de l'allumage.

4. Procédé selon les revendications 1 à 3, caractérisé en ce que les résultats des différents procédés sont contrôlés par une analyse de vraisemblance pour réduire le risque de résultats de surveillance erronés.
